# FASCICULE DE BREVET EUROPEEN

(11) **EP 2 984 565 B1**
(45) Date de publication et mention de la délivrance du brevet: **21.08.2019**
(21) Numéro de dépôt: 14715372.0
(22) Date de dépôt: 17.03.2014
(51) Int. Cl.: G06F 9/48, G06F 9/50

(54) **PROCÉDÉ D'EXÉCUTION DE TACHES DANS UN SYSTEM TEMPS-RÉEL CRITIQUE**
VERFAHREN ZUR AUSFÜHRUNG VON AUFGABEN IN EINEM KRITISCHEN ECHTZEITSYSTEM
METHOD FOR EXECUTING TASKS IN A CRITICAL REAL-TIME SYSTEM

(30) Priorité: 09.04.2013 FR 1353203
(43) Date de publication de la demande: 17.02.2016
(73) Titulaire: Krono - Safe, 91400 Orsay (FR)
(72) Inventeur: DAVID, Vincent, F-91460 Marcoussis (FR)
(74) Mandataire: de Jong, Jean Jacques
(86) Numéro de dépôt international: PCT/FR2014/050612
(87) Numéro de publication internationale: WO 2014/167197

(56) Documents cités:
- REINHARD WILHELM ET AL: "The Worst-Case Execution-Time Problem?Overview of Methods and Survey of Tools", ACM TRANSACTIONS ON EMBEDDED COMPUTING SYSTEMS, ACM, NEW YORK, NY, US, vol. 7, no. 3, 1 avril 2008 (2008-04-01), pages 36-53, XP002538651, ISSN: 1539-9087
- COLIN A ET AL: "WORST CASE EXECUTION TIME ANALYSIS FOR A PROCESSOR WITH BRANCH PREDICTION", REAL TIME SYSTEMS, KLUWER ACADEMIC PUBLISHERS, DORDRECHT, NL, vol. 18, no. 2/03, 1 mai 2000 (2000-05-01) , pages 249-274, XP001096704, ISSN: 0922-6443, DOI: 10.1023/A:1008149332687
- LAMINE BOUGUEROUA ET AL: "Execution Overrun Management for Fixed-Priority Preemptive Scheduling of Sporadic Graph Tasks", EMERGING TECHNOLOGIES AND FACTORY AUTOMATION, 2006. ETFA '06. IEE E CONFERENCE ON, IEEE, PI, 1 septembre 2006 (2006-09-01), pages 413-420, XP031082614, ISBN: 978-0-7803-9758-3
- ALBERS K ET AL: "Hierarchical Event Streams and Event Dependency Graphs: A New Computational Model for Embedded Real-Time Systems", REAL-TIME SYSTEMS, 2006. 18TH EUROMICRO CONFERENCE ON DRESDEN, GERMANY 05-07 JULY 2006, PISCATAWAY, NJ, USA,IEEE, 5 juillet 2006 (2006-07-05), pages 97-106, XP010927454, DOI: 10.1109/ECRTS.2006.12 ISBN: 978-0-7695-2619-5
- ANANTARAMAN A ET AL: "Enforcing Safety of Real-Time Schedules on Contemporary Processors Using a Virtual Simple Architecture (VISA)", REAL-TIME SYSTEMS SYMPOSIUM, 2004. PROCEEDINGS. 25TH IEEE INTERNATIONA L LISBON, PORTUGAL 05-08 DEC. 2004, PISCATAWAY, NJ, USA,IEEE, 5 décembre 2004 (2004-12-05), pages 114-125, XP010759529, DOI: 10.1109/REAL.2004.19 ISBN: 978-0-7695-2247-0
- ARAVINDH ANANTARAMAN ET AL: "Virtual simple architecture (VISA): exceeding the complexity limit in safe real-time systems", PROCEEDINGS OF THE 30TH. INTERNATIONAL SYMPOSIUM ON COMPUTER ARCHITECTURE. ISCA 2003. SAN DIEGO, CA, JUNE 9 - 11, 2003; [INTERNATIONAL SYMPOSIUM ON COMPUTER ARCHITECTURE.(ISCA)], LOS ALAMITOS, CA : IEEE COMP. SOC, US, 9 juin 2003 (2003-06-09), pages 350-361, XP010796942, DOI: 10.1109/ISCA.2003.1207013 ISBN: 978-0-7695-1945-6
- SEHLBERG D ET AL: "Static WCET Analysis of Real-Time Task-Oriented Code in Vehicle Control Systems", LEVERAGING APPLICATIONS OF FORMAL METHODS, VERIFICATION AND VALIDATION, 2006. ISOLA 2006. SECOND INTERNATIONAL SYMPOSIUM ON, IEEE, PISCATAWAY, NJ, USA, 15 November 2006 (2006-11-15), pages 212-219, XP031237341, ISBN: 978-0-7695-3071-0
- CHEVOCHOT P ET AL: "Scheduling fault-tolerant distributed hard real-time tasks independently of the replication strategies", REAL-TIME COMPUTING SYSTEMS AND APPLICATIONS, 1999. RTCSA '99. SIXTH I NTERNATIONAL CONFERENCE ON HONG KONG, CHINA 13-15 DEC. 1999, LOS ALAMITOS, CA, USA,IEEE COMPUT. SOC, US, 13 December 1999 (1999-12-13), pages 356-363, XP010365398, DOI: 10.1109/RTCSA.1999.811280 ISBN: 978-0-7695-0306-6

## Description

### Domaine technique de l'invention

L'invention est relative aux systèmes temps-réel critiques conçus pour exécuter des traitements ayant des échéances impératives établies par une base de temps. L'invention concerne en particulier les systèmes temps-réel nécessitant un haut niveau de performances dans leur mise en oeuvre, ainsi que les systèmes critiques pour lesquels un haut niveau de garantie est exigé quant à l'utilisation des ressources matérielles d'exécution allouées à chaque tâche du système.

L'invention s'applique notamment aux systèmes de contrôle-commande tels que ceux utilisés dans les domaines des transports (automobile, ferroviaire, naval, aéronautique), des automates industriels, de l'énergie, ainsi que d'autres systèmes pour lesquels l'allocation maîtrisée des ressources est importante, comme dans les réseaux de communications.

### État de la technique

Dans les systèmes temps-réel critiques, les tâches sont souvent modélisées comme des activités périodiques, ce qui conduit à la réalisation de systèmes multitâches fondés sur une politique de priorités fixes pour l'ordonnancement des tâches, offrant des garanties sur les performances atteintes. Un tel système est décrit, par exemple, dans l'article ["Scheduling algorithms for multiprogramming in a hard real-time environment", C. Liu, J. Layland, Journal of the ACM, vol. 20, no. 1, pp. 46-61].

En revanche, ce type d'approche manque de flexibilité lorsque le modèle très simple de tâches périodiques complexifie ou contraint la conception du système multitâche par un découpage arbitraire en tâches périodiques de certaines activités temps-réel qui ne le sont pas a priori. En effet, lorsqu'une activité temps-réel non-périodique est mise en oeuvre sous forme d'activités périodiques, cela conduit à multiplier le nombre de tâches ou à augmenter le rythme des tâches pour satisfaire les contraintes temporelles de manière séparée, chaque tâche n'étant plus alors forcément utile à chaque exécution périodique, ce qui impacte négativement les performances du système multitâche.

D'autres approches, comme celles décrites dans les articles ["Giotto: A Time-Triggered Language for Embedded Programming", Thomas A. Henzinger, Benjamin Horowitz, and Christoph Meyer Kirsch, EMSOFT 2001, pp. 166-184, 2001, Springer-Verlag] et ["A method and a technique to model and ensure timeliness in safety critical real-time systems", C. Aussaguès, V. David, Fourth IEEE International Conference on Engineering of Complex Computer Systems, 1998], proposent des modèles de tâches plus flexibles permettant de décrire chaque tâche comme des séquences d'activités temporelles. Une tâche est alors formalisée sous la forme d'un graphe de traitements avec des contraintes de temps, les traitements pouvant être le cas échéant conditionnels, comme cela est proposé dans le brevet US7299383.

Il est alors possible d'avoir une grande flexibilité et un haut niveau de performances du système multitâche, et même une garantie formelle de l'ordonnançabilité, mais cette garantie impose généralement au système un ordonnancement dynamique. Il en résulte des interférences temporelles entre les tâches en ce que les tâches, ou les traitements qui les constituent, entrent en concurrence pour l'ordonnancement et qu'une tâche peut ainsi être exécutée avant ou après une tâche concurrente.

Dans des systèmes critiques, où la sûreté de l'exécution prime, on préfère éviter les systèmes à ordonnancement dynamique, car il n'est pas possible de tester de manière exhaustive toutes les combinaisons d'ordonnancement possibles ou de prouver l'inexistence de situations pouvant entraîner une défaillance. On préfère alors des systèmes ayant une combinatoire réduite pour les activités de test, et donc viser des systèmes limitant les interférences temporelles entre les tâches. Cela conduit classiquement à utiliser une approche statique peu flexible.

### Résumé de l'invention

On souhaite ainsi pouvoir construire des systèmes temps-réel basés sur des modèles de tâches flexibles, mais offrant une mise en oeuvre qui limite les interférences temporelles.

On tend à satisfaire ce besoin grâce à un procédé d'exécution d'une tâche formée d'un ensemble de traitements séquentiels et alternatifs, comprenant les étapes suivantes :
a) affecter à chaque traitement un besoin en ressources matérielles et une contrainte temporelle ;
b) associer à chaque traitement un créneau temporel ayant une durée correspondant à la contrainte temporelle du traitement ;
c) identifier un point de branchement auquel est décidée l'exécution de l'un ou l'autre de deux traitements alternatifs ;
d) associer aux deux traitements alternatifs un créneau temporel commun ;
e) affecter au créneau temporel commun un besoin égal au plus grand des besoins des deux traitements alternatifs ;
f) réitérer à partir de l'étape c) pour chaque point de branchement ;
g) organiser les créneaux temporels résultants dans un gabarit d'exécution associé à la tâche ; et
h) configurer un système multitâche temps-réel pour contraindre l'exécution de la tâche en fonction des besoins affectés aux créneaux temporels du gabarit d'exécution.

Selon un mode de mise en oeuvre, le procédé comprend les étapes consistant à représenter la tâche à l'aide d'un graphe définissant un ensemble de traitements reliés par des noeuds de transition, dans lequel chaque noeud de transition définit un point de synchronisation selon une base de temps lors de l'exécution de la tâche sur le système multitâche ; définir les limites du créneau temporel associé à chaque traitement à partir des noeuds de transition source et destination du traitement ; pour deux traitements alternatifs ayant un noeud source commun et deux noeuds cible respectifs, fusionner les deux noeuds cible en un noeud cible fusionné ; et définir le créneau temporel commun aux deux traitements alternatifs à partir du noeud source commun et le noeud cible fusionné.

Selon un mode de mise en oeuvre, pour deux traitements alternatifs ayant à l'étape c) des contraintes temporelles différentes, le procédé comprend les étapes consistant à créer un noeud de transition intermédiaire dans un premier des deux traitements alternatifs, celui ayant la contrainte temporelle la plus longue, d'où il résulte un premier traitement partiel alternatif entre le noeud source et le noeud intermédiaire, et un deuxième traitement partiel entre le noeud intermédiaire et le noeud cible du premier traitement alternatif ; affecter au premier traitement partiel alternatif un premier besoin et une contrainte temporelle égale à la contrainte temporelle du deuxième traitement alternatif ; affecter au deuxième traitement partiel un deuxième besoin tel que la somme des premier et deuxième besoins soit égale au besoin du premier traitement alternatif, et une contrainte temporelle égale à la différence des contraintes temporelles des deux traitements alternatifs ; et procéder avec le premier traitement partiel alternatif et le deuxième traitement alternatif selon l'étape d).

Selon un mode de mise en oeuvre, le procédé comprend les étapes consistant, dans chaque créneau temporel, à vérifier par un chien de garde que l'exécution du traitement en cours respecte le besoin affecté au créneau temporel ; et ne pas signaler d'anomalie par le chien de garde si l'exécution du traitement en cours dépasse le besoin et que le traitement en cours est le premier traitement partiel alternatif.

Selon un mode de mise en oeuvre, le procédé comprend les étapes consistant à activer une variable d'état à l'exécution du premier traitement partiel alternatif ; ne pas signaler d'anomalie par le chien de garde si l'exécution du traitement en cours dépasse le besoin et que la variable d'état est active ; et désactiver la variable d'état à un point de synchronisation correspondant à un noeud cible fusionné.

Selon un mode de mise en oeuvre, le procédé comprend, pour une partie cyclique du graphe, les étapes consistant à diviser chaque traitement ayant une contrainte temporelle longue en un ensemble de traitements partiels ayant une contrainte temporelle courte qui est le plus grand commun diviseur des contraintes temporelles des traitements de la partie cyclique, d'où il résulte que la partie cyclique du graphe est transformée en un sous-graphe normalisé définissant une succession de traitements, complets ou partiels, ayant tous la même contrainte temporelle normalisée ; et répartir le besoin de chaque traitement de contrainte temporelle longue entre les traitements partiels correspondants, d'où il résulte que la somme des besoins des traitements partiels est égale au besoin du traitement de contrainte temporelle longue.

Selon un mode de mise en oeuvre, le procédé comprend les étapes consistant à superposer la fin d'une première partie du sous-graphe sur le début d'une deuxième partie du sous-graphe, de sorte que les noeuds de transition de la fin de la première partie du sous-graphe soient confondus avec des noeuds respectifs du début de la deuxième partie du sous-graphe, d'où il résulte que deux paires consécutives de noeuds confondus définissent un créneau temporel commun aux traitements ayant pour origines respectives les deux noeuds de la première paire ; et affecter au créneau temporel commun ainsi défini un besoin égal au plus grand des besoins des traitements associés à la première paire de noeuds, et une contrainte temporelle égale à la contrainte temporelle normalisée.

### Description sommaire des dessins

Des modes de réalisation seront exposés dans la description suivante, faite à titre non limitatif en relation avec les figures jointes parmi lesquelles :
- la figure 1 est un exemple de graphe de tâche temps-réel conforme à un modèle de tâche flexible, ayant des alternatives de branchement de contraintes temporelles identiques ;
- les figures 2A et 2B représentent une trace d'exécution partielle de l'une des séquences de traitements possible du graphe de la figure 1, et une trace d'exécution d'une tâche parallèle ;
- les figures 3A à 3C représentent des transformations du graphe de la figure 1 et un gabarit d'exécution statique résultant ;
- la figure 4 est un exemple de graphe de tâche temps-réel conforme à un modèle de tâche flexible, ayant des alternatives de branchement de contraintes temporelles différentes ;
- les figures 5A à 5C représentent des transformations du graphe de la figure 4 pour une première variante de contraintes temporelles, et un gabarit d'exécution statique résultant ;
- les figures 6A à 6C représentent des transformations du graphe de la figure 4 pour une deuxième variante de contraintes temporelles ; et
- les figures 7A et 7B illustrent des étapes d'optimisation du gabarit d'exécution de la figure 5C.

### Description d'un mode de réalisation préféré de l'invention

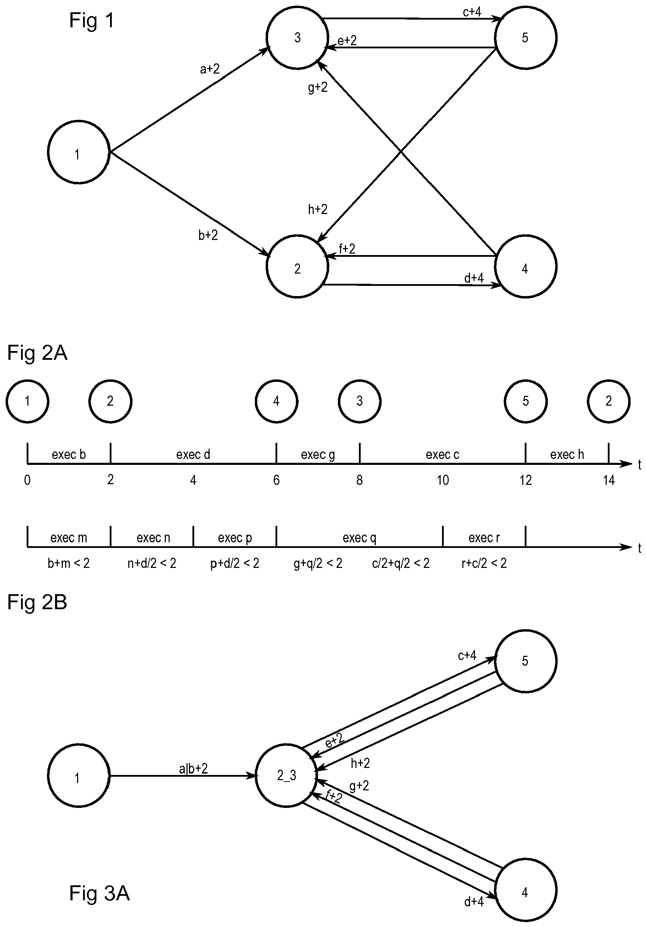

La figure 1 est un exemple de graphe de tâche temps-réel conforme à un modèle de tâche flexible. Dans ce graphe, comme dans les graphes exposés plus loin, chaque traitement composant la tâche est représenté par un arc orienté entre deux noeuds de transition, un noeud source et un noeud cible. Les noeuds représentent des points de synchronisation servant au système d'exploitation, lors de l'exécution de la tâche, à organiser le lancement des traitements. Chaque traitement est affecté d'une contrainte temporelle identifiant la durée entre les points de synchronisation correspondants.

En outre, pour qu'un traitement puisse être exécuté dans les limites de sa contrainte temporelle, il a également un besoin en ressources matérielles (occupation processeur, empreinte mémoire).

Chaque arc (ou traitement) du graphe est annoté par une information *x*+*N*, où *x* est un indicateur de besoin en ressources et *N* un indicateur de contrainte temporelle. Le besoin en ressources *x* peut être exprimé sous la forme d'un temps, à savoir le temps nécessaire à l'achèvement du traitement en supposant qu'il dispose de la totalité des ressources matérielles. La contrainte temporelle peut être un entier dénombrant des unités de temps. Ainsi, en exprimant *x* et *N* avec la même unité de temps, les valeurs *x* et *N* sont choisies telles que *x* ≤ *N.* Si *x* = *N*, le traitement a besoin de toutes les ressources matérielles sur l'ensemble du créneau temporel défini par la contrainte temporelle, de sorte qu'aucun autre traitement ne peut être exécuté en parallèle dans le même créneau. (Le calcul des besoins et des contraintes temporelles ne fait pas partie du sujet de la présente demande, et ne sera pas décrit en détail.)

Ci-après, on identifie également un traitement par la lettre utilisée pour désigner le besoin.

Le graphe ou la tâche est dit selon un « modèle flexible » en ce qu'il comporte des branchements et des boucles organisés de manière quelconque. Du fait que chaque branchement est décidé dynamiquement à l'exécution, et cela d'une façon non-prévisible, on ne retrouve pas de périodicité dans la séquence d'exécution des traitements. On comprendra les conséquences ci-après.

La figure 2A représente un exemple de trace d'exécution du graphe de la figure 1. Les noeuds parcourus lors de l'exécution sont reportés sur un axe temporel à des écarts définis par les contraintes temporelles des traitements. Ainsi, les noeuds sont positionnés à des points de synchronisation fixes où le système d'exploitation lance les traitements correspondants.

Chaque traitement peut prendre un temps variable selon son besoin et les ressources effectivement disponibles. Le système d'exploitation exécute en outre un processus de « chien de garde » qui est configuré pour compter le temps passé dans l'exécution de chaque traitement. Si un traitement dépasse le besoin temporel qui lui est affecté, le chien de garde signale une anomalie. Le besoin temporel peut ainsi être considéré comme un quota de temps d'exécution.

L'exécution de la tâche du graphe de la figure 1 commence au noeud 1, où se présente un premier branchement entre deux traitements alternatifs *a* et *b.* Le traitement *b* est sélectionné pour exécution, menant au noeud 2. Un traitement *d* est exécuté entre les noeuds 2 et 4. Au noeud 4 se présente un nouveau branchement, entre un traitement *f* et un traitement *g* ; le traitement *g* est sélectionné pour exécution, menant au noeud 3. Un traitement *c* est exécuté entre les noeuds 3 et 5. Au noeud 5 se présente un nouveau branchement, entre un traitement *e* et un traitement *h* ; le traitement *h* est sélectionné pour exécution, menant au noeud 2...

Dans le cas général, les besoins définis pour les traitements sont nettement inférieurs aux contraintes temporelles, signifiant que l'exécution de la tâche laisse des ressources libres pour exécuter d'autres tâches en parallèle.

La figure 2B représente une trace d'exécution d'une tâche exécutée en parallèle avec la tâche de la figure 2A. Cette tâche parallèle comporte la séquence de traitements *m, n, p, q* et *r*, ayant des besoins définis avec les mêmes notations. Pour faciliter la compréhension, on représente pour cette tâche des points de synchronisation alignés avec ceux de la tâche de la figure 2A, avec toutefois des variations dans les contraintes temporelles. Pour que cette tâche puisse être ordonnancée en parallèle avec celle de la figure 2A, il est souhaitable, dans tout intervalle entre points de synchronisation, que la somme des besoins des traitements soit compatible avec les contraintes temporelles. On a indiqué sous l'axe des temps un jeu possible d'inéquations à satisfaire pour l'exemple considéré.

Ainsi, pour ordonnancer deux tâches en parallèle, on a besoin de connaître la séquence des traitements pour en déduire les paramètres nécessaires. Si cette séquence peut être déterminée hors-ligne, l'ordonnancement peut également être fait hors-ligne, c'est-à-dire de manière statique. Lorsque la tâche est conforme à un modèle flexible, c'est-à-dire qu'elle comporte notamment des branchements, il n'est pas possible de connaître la séquence hors-ligne. L'ordonnancement est alors fait traditionnellement de manière dynamique, c'est-à-dire à l'exécution, au fur et à mesure que les conditions de branchement sont identifiées.

Dans un système temps-réel critique, on souhaite en outre vérifier que le système est sûr pour toute combinaison d'ordonnancement possible. Cela est fait traditionnellement en testant toutes les combinaisons. Lorsque l'ordonnancement est fait de manière dynamique, le nombre de combinaisons à tester peut devenir prohibitif en pratique.

On propose ci-après une méthodologie permettant de réaliser un ordonnancement statique, ou hors-ligne, de tâches conformes à un modèle flexible. Cette méthodologie permet en même temps de limiter le nombre de combinaisons d'ordonnancement, de sorte qu'elles puissent être vérifiables de manière exhaustive à l'aide d'outils classiques.

On cherche à établir pour chaque tâche ce qu'on appellera un « gabarit d'exécution » statique, qui est exploitable par un outil d'ordonnancement hors-ligne.

Pour cela, on associe aux deux traitements alternatifs pouvant suivre un branchement un créneau temporel unique dans le gabarit d'exécution. Le besoin affecté au créneau unique est défini comme égal au plus grand des besoins des deux traitements alternatifs. Il reste à définir la contrainte temporelle affectée au créneau, c'est-à-dire les limites du créneau.

Dans un premier temps, on traite le cas où les traitements alternatifs ont la même contrainte temporelle. Dans un cas plus général, comme on le verra plus loin, on sera capable d'effectuer une transformation permettant de revenir au cas où les deux traitements alternatifs ont la même contrainte temporelle.

Dans le graphe de la figure 1, les traitements alternatifs suivant chaque branchement (noeuds 1, 4 et 5) ont, justement, des contraintes temporelles identiques.

La figure 3A illustre une première étape de transformation du graphe de la figure 1. Les deux noeuds cible 2 et 3 des deux tâches alternatives *a* et *b* sont fusionnés en un noeud unique 2_3. Les arcs qui reliaient les noeuds 2 et 3 aux noeuds 4 et 5 sont tous reliés au noeud 2_3. Les deux arcs qui partaient du noeud 1 vers les noeuds 2 et 3 sont fusionnés en un arc unique. Cet arc unique est associé à un traitement « ambivalent » représentant l'un quelconque des traitements *a* et *b,* et noté *a*|*b*+*2*. Comme l'indique cette notation, la contrainte temporelle commune (+2) des traitements *a* et *b* devient la contrainte temporelle du traitement ambivalent. Le besoin du traitement ambivalent est défini égal à la valeur maximale, *max(a, b)*, des besoins des traitements *a* et *b.*

On aperçoit que les traitements *c* et *d*, qui n'étaient pas des alternatives d'un branchement, deviennent des alternatives partant du noeud fusionné 2_3. On aperçoit également que les alternatives *f*, *g* et *e*, *h* partant de chacun des noeuds 4 et 5 vers les noeuds 2 et 3 sont rassemblées du fait que les noeuds 2 et 3 ont fusionné. On aurait pu dès cette étape les représenter par un arc unique, comme l'arc *a*|*b*+2*.*

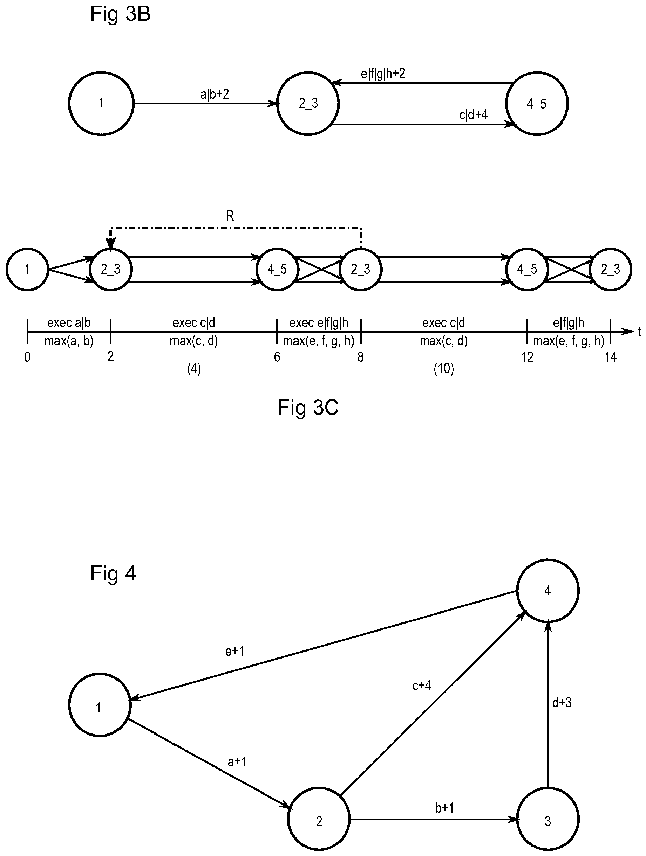

La figure 3B illustre une étape finale de transformation du graphe de la figure 1. Les noeuds cible 4 et 5 des traitements alternatifs *c* et *d* sont fusionnés en un noeud 4 5. On retrouve alors deux traitements c et *d* de même contrainte temporelle (+4) partant du noeud 2_3 vers le noeud 4_5, et quatre traitements *e*, *f*, *g*, et *h* de même contrainte temporelle (+2) partant en sens inverse. Selon les règles utilisées pour les traitements alternatifs *a* et *b*, tous les arcs d'un même noeud source vers un même noeud cible, et ayant la même contrainte temporelle, sont fusionnés en un arc unique associé à un traitement ambivalent, conservant la contrainte temporelle, et dont le besoin est défini égal au maximum des besoins des arcs fusionnés. On obtient ainsi un traitement ambivalent unique *c*|*d*+4 du noeud 2_3 vers le noeud 4_5, ayant un besoin *max(c, d)* et un traitement ambivalent unique *e*|*f*|*g*|*h*+2 en sens inverse, ayant un besoin *max(e, f, g, h).* On parvient ainsi à supprimer toutes les alternatives d'un graphe pour produire un graphe dont le parcours se termine par une partie cyclique à exécuter en continu.

La figure 3C illustre un gabarit d'exécution déterminé à partir du graphe transformé de la figure 3B, dans le même format que la trace d'exécution de la figure 2A. Une différence notable entre le gabarit et la trace est que le gabarit est déterminable hors-ligne à l'aide du graphe transformé de la figure 3B.

A un instant *t*=*0*, l'exécution de l'une des alternatives *a* et *b* est décidée au noeud 1. Peu importe l'alternative, elle est exécutée dans le créneau unique défini entre les noeuds 1 et 2_3, dont la durée est compatible avec les deux alternatives. L'un des traitements *c* et *d* est exécuté, peu importe lequel, dans le créneau suivant défini entre les noeuds 2 3 et 4_5. Finalement, l'un des traitements *e, f g,* et *h* est exécuté dans le créneau défini entre les noeuds 4_5 et 2_3. L'exécution redémarre alors selon un nouveau cycle R au noeud 2_3.

Les besoins affectés aux créneaux entre les noeuds 1, 2_3, 4_5 et 2_3 sont, respectivement, *max(a, b), max(c, d),* et *max(e, f, g, h).*

Ce gabarit d'exécution est un produit intermédiaire d'une chaîne de compilation qui traite un code source définissant le graphe de la tâche. Ce gabarit fournit des paramètres servant au système d'exploitation pour exécuter la tâche et vérifier son bon déroulement, notamment les besoins affectés aux créneaux temporels, besoins servant à configurer un chien de garde pour vérifier que les traitements correspondants s'exécutent dans les temps.

On remarquera que cette méthodologie ne modifie pas le déroulement de la tâche, mais modifie les contraintes d'exécution des traitements, du fait que le chien de garde est configuré pour tenir compte de besoins majorés au lieu de besoins exacts.

Le gabarit permet en outre de prédire à tout instant comment la tâche évolue du point de vue de ses besoins et contraintes temporelles. En effet, si on isole la partie cyclique R du gabarit de la figure 3C, on s'aperçoit qu'on peut la répéter à l'infini à partir du premier noeud 2 de la figure 2A pour prédire les besoins et contraintes temporelles en n'importe quel point de la trace d'exécution, et cela quelles que soient les alternatives exécutées après les branchements. La seule contrepartie est que les valeurs des besoins sont majorées au lieu d'être exactes.

Un gabarit similaire est produit pour chaque tâche à exécuter sur le système. Les durées des créneaux temporels et les besoins correspondants, définis dans ces gabarits, sont exploitables par un outil d'ordonnancement hors-ligne qui pourra produire des paramètres d'ordonnancement statique pour le système d'exploitation.

La figure 4 est un exemple de graphe comprenant des traitements alternatifs ayant des contraintes temporelles différentes, ce qui correspond à un cas plus général que celui du graphe de la figure 1. L'exécution commence à un noeud 1 par un traitement *a* qui aboutit sur un noeud 2. Au noeud 2 a lieu un branchement sur un traitement *b*, de contrainte temporelle +1, ou un traitement *c*, de contrainte temporelle +4. Le traitement *b* aboutit sur un noeud 3, tandis que le traitement c aboutit sur un noeud 4. Un traitement *d,* de contrainte temporelle +3 part du noeud 3 vers le noeud 4. Finalement, un traitement *e* part du noeud 4 vers le noeud 1.

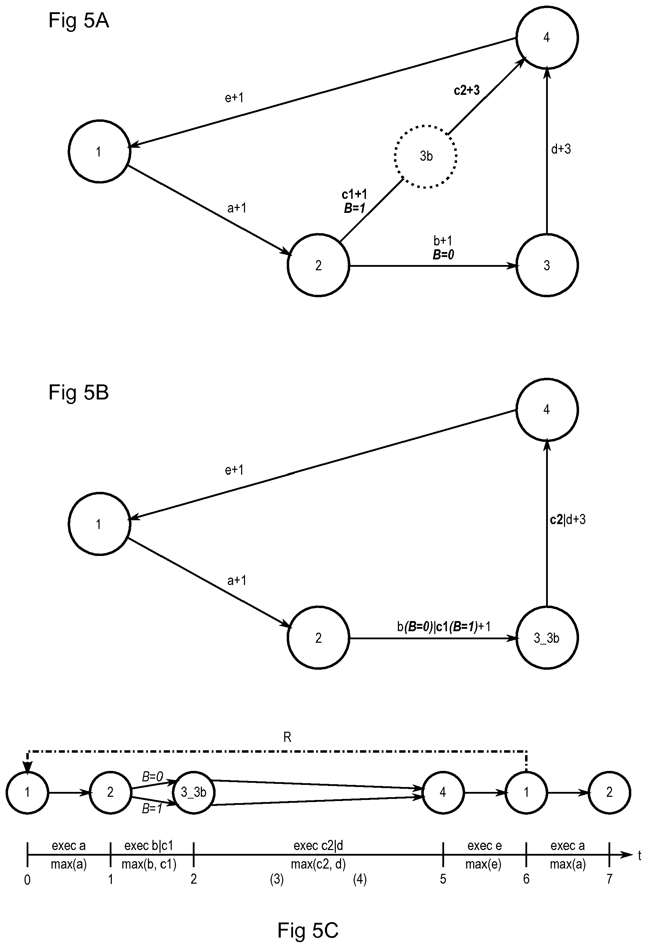

On souhaite modifier ce graphe pour qu'il soit transformable comme celui de la figure 1 pour définir un gabarit d'exécution statique. Les figures 5A à 5C illustrent une méthodologie pour cela.

La figure 5A illustre une première étape de transformation du graphe de la figure 4. Dans le traitement alternatif ayant la contrainte temporelle la plus longue, le traitement *c*, on insère un noeud intermédiaire 3b. On considère que l'arc reliant les noeuds 2 et 3b représente une partie *c1* du traitement *c*, et on lui affecte la même contrainte temporelle +1 que le traitement alternatif *b*. L'arc reliant les noeuds 3b et 4 représente la partie restante *c2* du traitement *c*, et on lui affecte le complément +3 de la contrainte temporelle du traitement *c*. Les besoins des traitements partiels *c1* et *c2* sont tels que *c1*+*c2* = *c.* La répartition du besoin *c* sur les besoins *c1* et *c2* peut être quelconque. On préfère optimiser cette répartition, par exemple de manière à minimiser les écarts entre les besoins des traitements alternatifs et leur valeur majorée. Par exemple, si *c*=*2*, *b*=*0,8*, et *d*=*1*, on pourra prendre *c1*= *0,9* et *c2*=*1,1*, produisant un écart maximum de 0,1.

On peut remarquer ici que le fait d'ajouter un besoin (*c1*) correspond à l'ajout d'une contrainte d'exécution à surveiller par le chien de garde, contrainte qui n'est a priori pas requise. Si aucune mesure n'est prise, le chien de garde vérifiera à partir du point 2 que l'exécution du traitement partiel *c1* respecte le besoin *c1*, alors que la contrainte initiale est que l'exécution du traitement c respecte le besoin c.

Une première solution pour satisfaire ces contraintes est que le développeur ou la chaîne de compilation gère le découpage du traitement c en traitements partiels *c1* et *c2* adaptés. Cela permet d'utiliser le système d'exploitation existant sans modification, en contrepartie d'une modification des caractéristiques d'exécution de la tâche.

On préfère une solution impliquant une modification simple du système d'exploitation. Comme l'illustre la figure 5A, on associe aux deux alternatives du branchement du noeud 2 une variable d'état ou drapeau *B* pour identifier l'alternative prise à l'exécution. Lorsque l'alternative exécutée correspond à l'arc non-modifié (*b*)*,* le drapeau *B* reste à sa valeur par défaut 0. Lorsque l'alternative correspond à l'arc modifié (*c1*)*,* le drapeau *B* est mis à 1 par le traitement lui-même ou par le système d'exploitation. L'utilisation de ce drapeau sera décrite plus en détail en relation avec la figure 5C.

La figure 5B illustre une transformation finale du graphe de la figure 5A. Du fait de l'insertion du noeud 3b, créant deux traitements alternatifs de même contrainte temporelle, on a pu fusionner leurs noeuds cible 3 et 3b selon la méthodologie décrite en relation avec la figure 3A. On crée ainsi un traitement ambivalent *b*|*c1* entre le noeud 2 et le noeud fusionné 3_3b, ayant la contrainte temporelle +1 et le besoin *max(b, c1).*

En utilisant le drapeau *B,* le traitement ambivalent est noté *b(B*=*0)*|*c1(B*=*1).*

Les traitements *d* et *c2* qui partaient des noeuds 3 et 3b vers le noeud 4, ayant la même contrainte temporelle +3, peuvent être fusionnés en un traitement ambivalent unique *c2*|*d* ayant la contrainte temporelle +3 et le besoin *max(c2, d).*

La figure 5C illustre un gabarit d'exécution déterminé à partir du graphe transformé de la figure 5B. Ce gabarit est répétitif selon la séquence de noeuds 1, 2, 3_3b, 4.

Si on n'utilise pas le drapeau *B,* et que le traitement partiel *c1* est exécuté dans son créneau correspondant, un chien de garde vérifie à partir du point 2 que le traitement *c1* respecte son besoin *c1.* Le traitement partiel *c1* doit alors être conçu pour satisfaire cette contrainte, alors qu'elle n'est pas impérative à l'origine.

Le drapeau *B* sert à désactiver le chien de garde dans cette situation, de sorte que les contraintes pour de tels traitements partiels puissent être assouplies.

Si le traitement alternatif *b* est exécuté, le drapeau *B* conserve son état initial 0. Cela indique au chien de garde de vérifier normalement l'exécution du traitement.

Si le traitement partiel alternatif *c1* est exécuté, le drapeau *B* est mis à 1 (par le traitement lui-même ou par le système d'exploitation). Dans ce cas, même si le besoin *c1* est dépassé, le chien de garde ne signale aucune anomalie. Le drapeau *B* est remis à 0 au point 3_3b, de sorte que le chien de garde opère de façon normale à partir du point 3_3b.

En utilisant ainsi le drapeau *B*, il devient inutile de découper réellement le traitement *c* en deux traitements partiels. Le traitement *c* d'origine est lancé dès le point 2, et son exécution peut durer au-delà du point 3_3b sans qu'une anomalie ne soit signalée. C'est seulement si l'exécution du traitement *c* dépasse le besoin *c1*+*c2* qu'une anomalie sera signalée, ce qui correspond aux contraintes du graphe initial. Par contre, pour les besoins de l'ordonnancement, on considère toujours que le besoin du traitement *c* est réparti sur deux valeurs *c1* et *c2.*

Comme on l'a remarqué plus haut, après l'insertion du noeud intermédiaire 3b, les traitements *c2* et *d* ont la même contrainte temporelle. Ces valeurs ont été choisies pour simplifier l'exposé. Dans le cas général, les contraintes temporelles seront différentes. Dans ce cas, il suffit de réitérer la technique utilisée pour le traitement *c*, comme illustré à titre d'exemple ci-dessous.

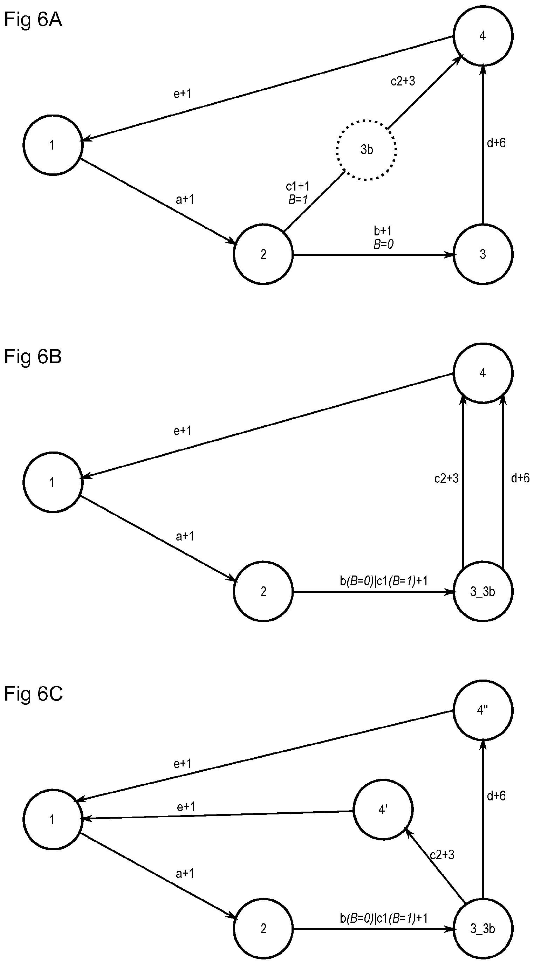

Les figures 6A à 6C illustrent des étapes de transformation du graphe de la figure 4 pour une valeur différente de la contrainte temporelle du traitement *d*, ici +6 au lieu de +3.

La figure 6A correspond à l'étape de la figure 5A. La seule différence est la valeur de la contrainte temporelle du traitement *d*.

A la figure 6B, les noeuds 3 et 3b ont été fusionnés. Les noeuds 3_3b et 4 sont reliés par deux arcs *c2*+*3* et *d*+*6* ayant des contraintes temporelles différentes.

A la figure 6C, le noeud 4 est séparé en deux noeuds, l'un, 4', servant de cible au traitement *c2*+*3* et l'autre, 4", servant de cible au traitement *d*+*6.* Chacun des noeuds 4' et 4" est relié au noeud 1 par un traitement e+1.

A partir de cette étape, on réitère la procédure de l'étape de la figure 6A ou 5A, en insérant un noeud intermédiaire dans le traitement de contrainte temporelle la plus longue, *d*+*6*, pour créer deux traitements alternatifs de même contrainte temporelle, *c2*+*3* et *d1*+*3*, et ainsi de suite, jusqu'à transformer le graphe en un graphe cyclique, ou se terminant par une partie cyclique.

A partir d'un graphe quelconque, on obtient par cette méthodologie un gabarit d'exécution formé d'un nombre borné de créneaux temporels de durées différentes, comprenant une partie cyclique. Pour ordonnancer différentes tâches en parallèle, un outil dédié saura exploiter les informations de besoin et de durée des créneaux, contenues dans les gabarits, pour trouver des combinaisons de gabarits exécutables en parallèle, et donc des tâches exécutables en parallèle. Ainsi, l'ordonnancement se réduit à apparier des gabarits (un seul par tâche) au lieu d'apparier des séquences de traitements (nombreuses par tâche).

Pour simplifier davantage les tests de validation du système, il est souhaitable que les gabarits d'exécution soient courts et que les créneaux temporels soient identiques.

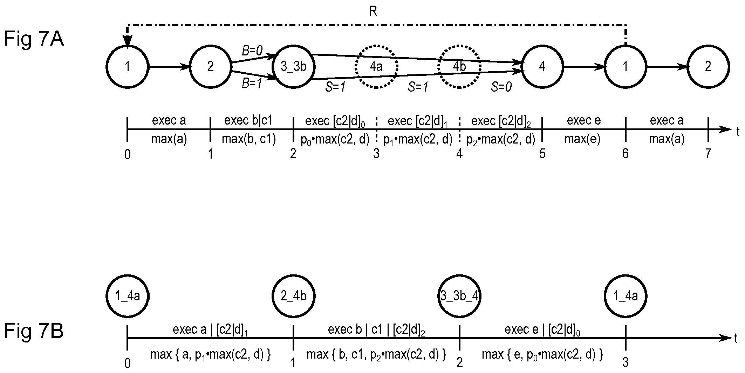

Les figures 7A et 7B illustrent une méthodologie permettant de normaliser la durée des créneaux temporels, et de raccourcir les gabarits.

La figure 7A illustre une étape de traitement du gabarit de la figure 5C, à titre d'exemple. On cherche, dans la partie cyclique du gabarit, à découper les créneaux les plus longs en plusieurs créneaux courts dont la longueur est le plus grand commun diviseur des créneaux de la partie cyclique. Dans le gabarit de la figure 7A, on découpe le créneau entre les noeuds 3_3b et 4, de longueur 3, en trois créneaux de longueur 1. Cela revient à insérer des noeuds de transition intermédiaires 4a et 4b dans l'arc *c2*|*d* du graphe.

Le traitement ambivalent *c2*|*d* est ainsi découpé en trois traitements ambivalents partiels [*c2*|*d*]₀ à [*c2*|*d*]₂ ayant la même contrainte temporelle +1. Le besoin initial du traitement *c2*|*d, max(c2, d),* est réparti entre les trois traitements partiels avec des coefficients de pondération *p₀, p₁* et *p₂*, tels que *p₀*+*p₁*+*p₂* = *1.*

Comme pour le noeud intermédiaire 3b de la figure 5A, les noeuds intermédiaires 4a et 4b deviennent des points de synchronisation à partir desquels le chien de garde surveille le temps d'exécution des traitements. Pour éviter de réellement découper le traitement *c2*|*d,* on préfère utiliser un drapeau *S* qui, comme le drapeau *B*, indique au chien de garde de ne pas signaler une anomalie si le traitement dépasse son besoin. Le drapeau *S* est mis à 1 inconditionnellement dès le lancement du traitement *c2*|*d* (donc en fait dès le lancement de l'un quelconque des traitements *c* et *d*), puis mis à 0 au dernier point de synchronisation intermédiaire (4b).

Cette technique permet donc de normaliser les durées des créneaux temporels, ce qui constitue une première amélioration pour simplifier les tests de validation.

La figure 7B illustre une étape permettant de raccourcir le gabarit d'exécution normalisé de la figure 7A. La deuxième moitié du gabarit a été superposée à la première moitié, de sorte que les noeuds 4a, 4b et 4 fusionnent respectivement avec les noeuds 1, 2 et 3_3b. Il ne subsiste que trois créneaux temporels de durée 1. Dans le premier, on prévoit l'exécution de l'un quelconque des traitements *a* et [*c2*|*d*]₁, donc en fait l'un quelconque des traitements *a, c* et *d* si on utilise les drapeaux *B* et *S*. Dans le deuxième créneau on prévoit l'exécution de l'un quelconque des traitements *b, c1*, et [*c2*|d]₂, donc en fait l'un quelconque des traitements *b, c* et *d.* Dans le dernier créneau, on prévoit l'exécution de l'un quelconque des traitements *e* et [*c2*|*d*]₀, donc en fait l'un quelconque des traitements *e, c* et *d.*

Les besoins définis pour ces créneaux suivent les mêmes règles de détermination que pour les traitements alternatifs. Ils valent respectivement *max{a, p₁•max(c2, d)}, max{b, c1, p₂•max(c2, d)},* et *max{e, p₀•max(c2, d)}.*

Pour l'exemple de gabarit considéré, complètement cyclique et ayant un nombre pair de créneaux, on parvient à réduire de moitié la taille du gabarit. Dans un cas quelconque, le gabarit comporte une partie linéaire suivie d'une partie cyclique (figures 3B, 3C) pouvant avoir un nombre impair de créneaux. La méthode de superposition s'applique à la partie cyclique normalisée. Elle est applicable même si la partie cyclique normalisée comporte un nombre impair de créneaux - en effet la superposition peut n'être que partielle, la contrepartie étant qu'on réduit moins la taille du gabarit.

## Revendications

1. Procédé d'ordonnancement hors-ligne des traitements formant une tâche conforme à un modèle flexible pour un système multitâche temps-réel, procédé comprenant les étapes suivantes mises en oeuvre dans une chaîne de compilation d'un code source définissant la tâche :
a) affecter à chaque traitement un besoin en ressources matérielles et une contrainte temporelle, les ressources matérielles incluant l'occupation processeur et l'empreinte mémoire ;
b) associer à chaque traitement un créneau temporel ayant une durée correspondant à la contrainte temporelle du traitement ;
c) identifier un point de branchement auquel est décidée l'exécution de l'un ou l'autre de deux traitements alternatifs *(a, b)* ;
d) associer aux deux traitements alternatifs un créneau temporel commun (+2) ;
e) affecter au créneau temporel commun un besoin (*max(a, b)*) égal au plus grand des besoins des deux traitements alternatifs ;
f) réitérer à partir de l'étape c) pour chaque point de branchement ;
g) organiser les créneaux temporels résultants dans un gabarit d'exécution associé à la tâche, le gabarit résultant étant défini par une succession de créneaux temporels consécutifs, chacun associé à au moins un traitement et un besoin en ressources ; et
h) produire des paramètres d'ordonnancement statiques pour le système multitâche à partir du gabarit d'exécution, où les créneaux configurent des points de synchronisation du système multitâche, servant à lancer les traitements correspondants, et le besoin en ressources associé à chaque créneau configure un chien de garde du système multitâche, servant à vérifier que le traitement correspondant s'exécute dans les temps.

2. Procédé selon la revendication 1, dans lequel le code source représente la tâche à l'aide d'un graphe définissant un ensemble de traitements reliés par des noeuds de transition, dans lequel chaque noeud de transition définit un point de synchronisation selon une base de temps lors de l'exécution de la tâche sur le système multitâche, le procédé comprenant les étapes suivantes :
• définir les limites du créneau temporel associé à chaque traitement à partir des noeuds de transition source et destination du traitement ;
• pour deux traitements alternatifs ayant un noeud source commun (*1*) et deux noeuds cible respectifs (*2*, *3*), fusionner les deux noeuds cible en un noeud cible fusionné (*2*_*3*) ; et
• définir le créneau temporel commun aux deux traitements alternatifs à partir du noeud source commun et le noeud cible fusionné (*2*_*3*).

3. Procédé selon la revendication 2, comprenant, pour deux traitements alternatifs (*b*+*1, c*+*4*) ayant à l'étape c) des contraintes temporelles différentes, les étapes suivantes :
• créer un noeud de transition intermédiaire (*3b*) dans un premier (*c*) des deux traitements alternatifs (*c*+*4*), celui ayant la contrainte temporelle la plus longue, d'où il résulte un premier traitement partiel alternatif (*c1*) entre le noeud source et le noeud intermédiaire, et un deuxième traitement partiel (*c2*) entre le noeud intermédiaire et le noeud cible du premier traitement alternatif ;
• affecter au premier traitement partiel alternatif un premier besoin (*c1*) et une contrainte temporelle (+*1*) égale à la contrainte temporelle du deuxième traitement alternatif ;
• affecter au deuxième traitement partiel un deuxième besoin (*c2*) tel que la somme des premier et deuxième besoins soit égale au besoin du premier traitement alternatif (*c*), et une contrainte temporelle (*c2*) égale à la différence des contraintes temporelles des deux traitements alternatifs ; et
• procéder avec le premier traitement partiel alternatif (*c1*+*1*) et le deuxième traitement alternatif (*b*+*1*) selon l'étape d).

4. Procédé d'exécution d'une tâche ordonnancée selon la revendication 3, comprenant les étapes suivantes mises en oeuvre dans le système multitâche :
• dans chaque créneau temporel, vérifier par le chien de garde que l'exécution du traitement en cours respecte le besoin affecté au créneau temporel ; et
• ne pas signaler d'anomalie par le chien de garde si l'exécution du traitement en cours dépasse le besoin et que le traitement en cours est le premier traitement partiel alternatif (*c1*).

5. Procédé selon la revendication 4, comprenant les étapes suivantes :
• activer une variable d'état (*B*=*1*) à l'exécution du premier traitement partiel alternatif (*c1*) ;
• ne pas signaler d'anomalie par le chien de garde si l'exécution du traitement en cours dépasse le besoin et que la variable d'état est active ; et
• désactiver la variable d'état à un point de synchronisation correspondant à un noeud cible fusionné (*2_3*).

6. Procédé selon la revendication 3, comprenant les étapes suivantes pour une partie cyclique du graphe :
• diviser chaque traitement (*c2*|*d*) ayant une contrainte temporelle longue en un ensemble de traitements partiels ayant une contrainte temporelle courte qui est le plus grand commun diviseur des contraintes temporelles des traitements de la partie cyclique, d'où il résulte que la partie cyclique du graphe est transformée en un sous-graphe normalisé définissant une succession de traitements, complets ou partiels, ayant tous la même contrainte temporelle normalisée ; et
• répartir le besoin de chaque traitement de contrainte temporelle longue entre les traitements partiels correspondants, d'où il résulte que la somme des besoins des traitements partiels est égale au besoin du traitement de contrainte temporelle longue.

7. Procédé selon la revendication 6, comprenant les étapes suivantes :
• superposer la fin d'une première partie du sous-graphe sur le début d'une deuxième partie du sous-graphe, de sorte que les noeuds de transition de la fin de la première partie du sous-graphe (*1, 2, 3_3b*) soient confondus avec des noeuds respectifs (*4a, 4b, 4*) du début de la deuxième partie du sous-graphe, d'où il résulte que deux paires consécutives de noeuds confondus définissent un créneau temporel commun aux traitements ayant pour origines respectives les deux noeuds de la première paire ; et
• affecter au créneau temporel commun ainsi défini un besoin égal au plus grand des besoins des traitements associés à la première paire de noeuds, et une contrainte temporelle égale à la contrainte temporelle normalisée.

## Patentansprüche

1. Verfahren zur Offline-Planung von Prozessen, die eine Aufgabe bilden, die einem flexiblen Modell für ein Echtzeit-Multitasking-System entspricht, wobei das Verfahren die folgenden Schritte umfasst, die in einer Kompilierungskette von Quellcode implementiert sind, welcher die folgende Aufgabe definiert:
a) Zuteilen einer Anforderung an materiellen Ressourcen und einer zeitlichen Beschränkung zu jedem Prozess, wobei die materiellen Ressourcen die Prozessorbelegung und die Speicherauslastung umfassen;
b) Zuordnen eines Zeitfensters mit einer Dauer, welche der zeitlichen Beschränkung des Prozesses entspricht, zu jedem Prozess;
c) Bestimmen eines Verbindungspunkts, an dem entschieden wird, einen der beiden alternativen Prozesse *(a, b*) durchzuführen;
d) Zuordnen eines gemeinsamen Zeitfensters (+2) zu den beiden alternativen Prozessen;
e) Zuteilen einer Anforderung *(max(a,* b)), welche der größeren der Anforderungen der beiden alternativen Prozesse entspricht, zu dem gemeinsamen Zeitfenster;
f) Wiederholen der Schritte ab Schritt c) für jeden Verbindungspunkt;
g) Organisieren der resultierenden Zeitfenster in einer der Aufgabe zugeordneten Durchführungsvorlage, wobei die resultierende Durchführungsvorlage durch eine Folge von aufeinanderfolgenden Zeitfenstern definiert ist, die jeweils mindestens einem Prozess und einer Anforderung an Ressourcen zugeordnet sind; und
h) Erzeugen statischer Planungsparameter für das Multitasking-System aus der Durchführungsvorlage, wobei die Zeitfenster Multitasking-Systemsynchronisationspunkte konfigurieren, um die entsprechenden Prozesse einzuleiten, und die mit jedem Zeitfenster verbundene Anforderung an Ressourcen einen Multitasking-System-Watchdog konfiguriert, um zu überprüfen, ob der entsprechende Prozess rechtzeitig durchgeführt wird.

2. Verfahren nach Anspruch 1, wobei der Quellcode die Aufgabe mit Hilfe eines Graphen darstellt, der einen Satz von Verfahren definiert, die durch Übergangsknoten verbunden sind, worin jeder Übergangsknoten einen Synchronisationspunkt gemäß einer Zeitbasis definiert, wenn er die Aufgabe auf dem Multitasking-System durchführt, wobei das Verfahren die folgenden Schritte umfasst:
• Definieren der Grenzen des Zeitfensters, das jedem Prozess ab den Quell- und Zielübergangsknoten des Prozesses zugeordnet ist;
• Zusammenführen der beiden Zielknoten zu einem zusammengeführten Zielknoten (*2*_*3*) für zwei alternative Prozesse, die einen gemeinsamen Quellknoten (1) und zwei jeweilige Zielknoten (2, 3) aufweisen; und
• Definieren des gemeinsamen Zeitfensters für die beiden alternativen Prozesse ab dem gemeinsamen Quellknoten und dem zusammengeführten Zielknoten *(2*_*3*)*.*

3. Verfahren nach Anspruch 2, welches für zwei alternative Prozesse *(b*+*1, c*+*4*) die in Schritt c) unterschiedliche zeitliche Beschränkungen aufweisen, die folgenden Schritte umfasst:
• Erzeugen eines Zwischenübergangsknotens *(3b*) in einem ersten *(c*) der beiden alternativen Prozesse (*c*+*4*), welcher die längste zeitliche Beschränkung aufweist, was zu einem ersten alternativen Teilprozess (*c1*) zwischen dem Quellknoten und dem Zwischenknoten und einem zweiten Teilprozess (*c2*) zwischen dem Zwischenknoten und dem Zielknoten des ersten alternativen Prozesses führt;
• Zuteilen einer ersten Anforderung (*c1*) und einer zeitlichen Beschränkung (+*1*), die der zeitlichen Beschränkung des zweiten alternativen Prozesses entspricht, zu dem ersten alternativen Teilprozess;
• Zuteilen einer zweiten Anforderung (*c2*) zu dem zweiten Teilprozess, so dass die Summe der ersten und zweiten Anforderungen der Anforderung des ersten alternativen Prozesses (*c*) entspricht, und einer zeitlichen Beschränkung (*c2*), die der Differenz der zeitlichen Prozesse der beiden alternativen Prozesse entspricht; und
• Fortfahren mit dem ersten alternativen Teilprozess (*c1*+*1*) und dem zweiten alternativen Prozess *(b*+*1*) gemäß Schritt d).

4. Verfahren zum Durchführen einer nach Anspruch 3 geplanten Aufgabe, das die folgenden Schritte, die in dem Multitasking-System umgesetzt sind, umfasst:
• Überprüfen in jedem Zeitfenster durch den Watchdog, ob die Durchführung des vorliegenden Prozesses die Anforderung erfüllt, welche dem Zeitfenster zugeordnet ist; und
• Davon absehen, Anomalien durch den Watchdog zu melden, wenn die Durchführung des vorliegenden Prozesses über die Anforderung hinausgeht und der vorliegende Prozess der erste alternative Teilprozess ist *(c1).*

5. Verfahren nach Anspruch 4, das die folgenden Schritte umfasst:
• Aktivieren einer Zustandsvariablen (*B*=*1*) bei der Durchführung des ersten alternativen Teilprozesses *(c1);*
• Davon absehen, Anomalien durch den Watchdog zu melden, wenn die Durchführung des vorliegenden Prozesses über die Anforderung hinausgeht und die Zustandsvariable aktiv ist; und
• Deaktivieren der Zustandvariablen an einem Synchronisationspunkt, der einem zusammengeführten Zielknoten (*2*_*3*) entspricht.

6. Verfahren nach Anspruch 3, das die folgenden Schritte für einen zyklischen Teil des Graphen umfasst:
• Unterteilen jedes Prozesses *(c2*|*d)*, der eine lange zeitliche Beschränkung aufweist, in eine Reihe von Teilprozessen, die eine kurze zeitliche Beschränkung aufweisen, die der größte gemeinsame Teiler der zeitlichen Beschränkungen der Prozesse des zyklischen Teils ist, wobei der zyklische Teil des Graphen in einen Standard-Teilgraph umgewandelt wird, der vollständig oder teilweise eine Abfolge von Prozessen definiert, die alle die gleiche zeitliche Standardbeschränkung aufweisen; und
• Aufteilen der Anforderung jedes Prozesses, der eine lange zeitliche Beschränkung aufweist, zwischen den entsprechenden Teilprozessen, so dass die Summe der Anforderungen der Teilprozesse der Anforderung des Prozesses, der eine lange zeitliche Beschränkung aufweist, entspricht.

7. Verfahren nach Anspruch 6, das die folgenden Schritte umfasst:
• Überlagern des Endes eines ersten Teils des Teilgraphen über den Anfang eines zweiten Teils des Teilgraphen, so dass die Übergangsknoten am Ende des ersten Teils des Teilgraphen (*1*, *2, 3_3b)* mit entsprechenden Knoten *(4a, 4b, 4)* am Anfang des zweiten Teils des Teilgraphen verwechselt werden, was zu zwei aufeinanderfolgenden Paaren von verwechselten Knoten führt, die ein gemeinsames Zeitfenster für die Prozesse definieren, welche auf die beiden Knoten des ersten Paares zurückgehen; und
• Zuteilen einer Anforderung zu dem so definierten gemeinsamen Zeitfenster, welche dem größten der Anforderungen des Prozesses entspricht, die dem ersten Knotenpaar zugeordnet sind, und zu einer zeitlichen Beschränkung, die der zeitlichen Standardbeschränkung entspricht.

## Claims

1. A method for offline scheduling processes forming a task conforming to a flexible model for a real-time multitasking system, the method comprising the following steps carried out by a toolchain for compiling source code defining the task:
a) assigning to each process a hardware resource need and a time constraint, wherein hardware resources include CPU occupation and memory footprint;
b) allocating to each process a time slot having a duration corresponding to the time constraint of the process;
c) identifying a branch point at which is decided the execution of one or the other of two alternative processes (a, b);
d) allocating to the two alternative processes a common time slot (+2);
e) assigning to the common time slot a resource need (max(a,b)) equal to the larger of the resource needs of the two alternative processes;
f) iterating from step c) for each branch point;
g) organizing the resulting time slots in an execution template associated with the task, the resulting template being defined by a succession of consecutive time slots, each associated to at least one process and a resource need; and
h) producing static scheduling parameters for the multitasking system from the execution template, wherein the time slots configure synchronization points of the real-time multitasking system for initiating the corresponding processes, and the resource need associated to each slot configures a watchdog of the real-time multitasking system for monitoring that the corresponding process executes within its constraints.

2. The method of claim 1, wherein the source code represents the task in the form of a graph defining a set of processes connected by transition nodes, wherein each transition node defines a synchronization point according to a time base during execution of the task on the multitasking system, the method comprising the steps of:
• defining the limits of the time slot allocated to each process from a source transition node and a destination transition node of the process;
• for two alternative processes that have a common source node (1) and two respective target nodes (2, 3), merging the two target nodes into a merged target node (2_3); and
• defining the time slot common to both alternative processes from the common source node and the merged target node (2_3).

3. The method according to claim 2, comprising, for two alternative processes (b+1, c+4) having in step c) different time constraints, the following steps:
• creating an intermediate transition node (3b) in a first (c) of the two alternative processes (c+4) having the longest time constraint, resulting in a first partial alternative process (c1) between the source node and the intermediate node, and a second partial process (c2) between the intermediate node and the target node of the first alternative process;
• assigning to the first partial alternative process a first resource need (c1) and a time constraint (1) equal to the time constraint of the second alternative process;
• assigning to the second partial process a second resource need (c2) such that the sum of the first and second resource needs is equal to the resource need of the first alternative process (c), and a time constraint (c2) equal to the difference of the time constraints of the two alternative processes; and
• proceeding with the first partial alternative process (c1+1) and the second alternative process (b+1) according to step d).

4. The method of executing a task scheduled according to claim 3, comprising the following steps executed in the multitasking system:
• in each time slot, checking by the watchdog that the execution of an ongoing process complies with the resource need assigned to the time slot; and
• omit signaling a fault by the watchdog if the execution of the ongoing process exceeds the resource need and the ongoing process is the first partial alternative process (c1).

5. The method of claim 4, comprising the steps of:
• setting a state variable (B=1) upon execution of the first partial alternative process (c1);
• omit signaling a fault by the watchdog if the execution of the ongoing process exceeds the resource need and the state variable is set; and
• clearing the state variable at a synchronization point corresponding to a merged target node (2_3).

6. The method according to claim 3, comprising the following steps for a cyclic portion of the graph:
• dividing each process (c2|d) having a longer time constraint in a set of partial processes having a shorter time constraint that is the greatest common divisor of the time constraints in the cyclic portion, whereby the cyclic portion of the graph is transformed into a normalized sub-graph defining a sequence of full or partial processes all having the same normalized time constraint; and
• distributing the resource need of each process having a longer time constraint between the corresponding partial processes, whereby the sum of the resource needs of the partial processes is equal to the resource need of the process having the longer time constraint.

7. The method of claim 6, comprising the steps of:
• overlapping the end of a first portion of the sub-graph over the beginning of a second portion of the sub-graph, so that the transition nodes of the end of the first portion of the sub-graph (1, 2, 3_3b) coincide with respective nodes (4a, 4b, 4) of the beginning of the second portion of the sub-graph, whereby two consecutive pairs of coincident nodes define a time slot common to the processes having as respective origins the two nodes of the first pair; and
• assigning to the common time slot thus defined a resource need equal to the greatest of the resource needs of the processes associated with the first pair of nodes, and a time constraint equal to the normalized time constraint.
